(19) Europäisches Patentamt
European Patent Office
Office européen des brevets

(11) **EP 4 539 354 A1**

(12) **EUROPEAN PATENT APPLICATION**
published in accordance with Art. 153(4) EPC

(43) Date of publication:
16.04.2025 Bulletin 2025/16

(21) Application number: 23859146.5

(22) Date of filing: 15.08.2023

(51) International Patent Classification (IPC):
*H04B 7/08* (2006.01)

(52) Cooperative Patent Classification (CPC):
H04B 7/08; H04L 25/02; H04L 25/03

(86) International application number:
PCT/CN2023/113106

(87) International publication number:
WO 2024/046112 (07.03.2024 Gazette 2024/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 02.09.2022 CN 202211071213

(71) Applicant: ZTE CORPORATION
Shenzhen, Guangdong 518057 (CN)

(72) Inventors:
• DONG, Zhanyi
 Shenzhen, Guangdong 518057 (CN)
• LI, Wenbin
 Shenzhen, Guangdong 518057 (CN)
• LIN, Wei
 Shenzhen, Guangdong 518057 (CN)
• RUI, Hua
 Shenzhen, Guangdong 518057 (CN)

(74) Representative: Ziebig Hengelhaupt Intellectual
Property Attorneys
Patentanwaltskanzlei PartGmbB
Leipziger Straße 49
10117 Berlin (DE)

(54) **DATA PROCESSING METHOD, AND ELECTRONIC DEVICE AND STORAGE MEDIUM**

(57) Disclosed in the present application are a data processing method, and an electronic device and a storage medium. The method comprises: determining a covariance matrix of frequency-domain data which is received by a receiver; according to the covariance matrix, determining the number of branches which are processed in parallel by the receiver, and a spatial-domain filtering weight corresponding to each of the branches, wherein each of the branches corresponds to an antenna of at least one dimension; for each of the branches, according to the spatial-domain filtering weight corresponding to the branch, performing dimension reduction processing on data corresponding to the branch, so as to obtain data which has been subjected to dimension reduction and corresponds to the branch; and completing a processing operation for the frequency-domain data according to the data which has been subjected to dimension reduction and corresponds to each of the branches.

```
┌─────────────────────────────────────────────────────┐
│ Determine a covariance matrix of frequency-domain     │──101
│ data which is received by a receiver                  │
└─────────────────────────────────────────────────────┘
                        ↓
┌─────────────────────────────────────────────────────┐
│ Determine, according to the covariance matrix, the    │──102
│ quantity of branches which are processed in parallel  │
│ by the receiver, and a spatial-domain filtering       │
│ weight corresponding to each of the branches          │
└─────────────────────────────────────────────────────┘
                        ↓
┌─────────────────────────────────────────────────────┐
│ Perform, for each of the branches, dimension          │──103
│ reduction processing on data corresponding to the     │
│ branch according to the spatial-domain filtering      │
│ weight corresponding to the branch, so as to obtain   │
│ dimension-reduced data corresponding to the branch    │
└─────────────────────────────────────────────────────┘
                        ↓
┌─────────────────────────────────────────────────────┐
│ Complete a processing operation for the frequency-    │──104
│ domain data according to dimension-reduced data       │
│ corresponding to the branch                           │
└─────────────────────────────────────────────────────┘
```

Fig. 1

**Description**

CROSS-REFERENCE TO RELATED APPLICATIONS

The present application claims priority to Chinese Patent Application No. 202211071213.4, filed with the Chinese Patent Office on September 02, 2022, and entitled "DATA PROCESSING METHOD, ELECTRONIC DEVICE AND STORAGE MEDIUM", which is incorporated herein by reference in its entirety.

TECHNICAL FIELD

The present application belongs to the technical field of receivers, and specifically relates to a data processing method, an electronic device and a storage medium.

BACKGROUND OF THE INVENTION

A traditional receiver requires a complex matrix inversion operation during large-scale antenna processing, resulting in high processing complexity. In addition, when a general-purpose processor is used for receiver processing, complex receiver processing often causes the general-purpose processor to occupy too much processing time, thereby affecting a processing timing of the entire system.

Therefore, a current problem to be solved is to minimize the complexity of the receiver during large-scale antenna processing without reducing performance of the receiver.

SUMMARY OF THE INVENTION

Embodiments of the present application provide a data processing method, an electronic device and a storage medium, so as to solve a problem of high complexity of a traditional receiver during large-scale antenna processing.

In a first aspect, an embodiment of the present application provides a data processing method, including: determining a covariance matrix of frequency-domain data which is received by a receiver; determining, according to the covariance matrix, the quantity of branches which are processed in parallel by the receiver, and a spatial-domain filtering weight corresponding to each of the branches, wherein each of the branches corresponds to an antenna of at least one dimension; performing, for each of the branches, dimension reduction processing on data corresponding to the branch according to the spatial-domain filtering weight corresponding to the branch, so as to obtain dimension-reduced data corresponding to the branch; and completing a processing operation for the frequency-domain data according to the dimension-reduced data corresponding to each of the branches..

In a second aspect, an embodiment of the present application further provides a data processing apparatus, including: a first determining module, configured to determine a covariance matrix of frequency-domain data which is received by a receiver; a second determining module, configured to determine, according to the covariance matrix, the quantity of branches which are processed in parallel by the receiver, and a spatial-domain filtering weight corresponding to each of the branches, wherein each of the branches corresponds to an antenna of at least one dimension; a dimension reduction module, configured to perform, for each of the branches, dimension reduction processing on data corresponding to the branch according to the spatial-domain filtering weight corresponding to the branch, so as to obtain dimension-reduced data corresponding to the branch; and a processing module, configured to complete a processing operation for the frequency-domain data according to the dimension-reduced data corresponding to the branch.

In a third aspect, an embodiment of the present application provides an electronic device, the electronic device includes a processor, a memory, and a program or instructions stored on the memory and capable of being run on the processor, and the program or the instructions, when executed by the processor, implements/implement steps of the method as described in the first aspect.

In a fourth aspect, an embodiment of the present application provides a readable storage medium. The readable storage medium stores a program or instructions thereon, and the program or the instructions, when executed by a processor, implements/implement steps of the method as described in the first aspect.

The embodiment of the present application includes: determining the covariance matrix of the frequency-domain data which is received by the receiver; determining, according to the covariance matrix, the quantity of branches which are processed in parallel by the receiver, and the spatial-domain filtering weight corresponding to each of the branches; performing dimension reduction processing on the data corresponding to the branches according to the spatial-domain filtering weights corresponding to the branches, so as to obtain the dimension-reduced data corresponding to the branch; and completing the processing operation for the frequency-domain data according to the dimension-reduced data corresponding to the branch.

BRIEF DESCRIPTION OF DRAWINGS

Fig. 1 is a schematic flow diagram of a data processing method in an embodiment of the present application.

Fig. 2 is a schematic flow diagram of determining the quantity of branches which are processed in parallel by a receiver and a spatial-domain filtering weight corresponding to each of the branches in an embodiment of the present application.

Fig. 3 is a first schematic diagram of a receiver in an embodiment of the present application.

Fig. 4 is a second schematic diagram of a receiver in an embodiment of the present application.

Fig. 5 is a third schematic diagram of a receiver in an embodiment of the present application.

Fig. 6 is a schematic structural diagram of a data processing apparatus in an embodiment of the present application.

Fig. 7 is a schematic structural diagram of an electronic device provided by an embodiment of the present application.

DETAILED DESCRIPTION OF THE INVENTION

The technical solutions in the embodiments of the present application will be clearly and completely described in the following with reference to the accompanying drawings in the embodiments of the present application. Apparently, the described embodiments are some rather than all of the embodiments of the present application. All other embodiments obtained by those ordinarily skilled in the art based on the embodiments in the present application without making creative efforts shall fall within the scope of protection of the present application.

In some cases, a traditional receiver, such as a multiple-input multiple-output (MIMO) receiver, is one of the major technological breakthroughs in the field of digital communication in recent years, and plays a significant role in improving a spectrum utilization and channel capacity of a wireless communication system. An MIMO system achieves parallel transmission of a plurality of signal flows. Compared with a traditional single-input single-output system, it is achieved at a receiving end of the system that a receiving signal of each receiving antenna is a superposition of multiple sending antenna signals. However, due to the presence of multiple antennas, the design of space-time combiner and signal detection to eliminate spatial interference has become exceptionally complex. Compared with a single antenna, the MIMO receiver has significantly increased complexity. For example, MIMO channel estimation may lead to increased complexity because each path delay in an entire channel matrix requires technical tracking and updating, rather than just tracking and updating a single coefficient. Therefore, it is necessary to research and design a large-scale antenna receiver with low complexity.

In view of this, a receiver is provided, which can perform covariance matrix calculation on received frequency-domain data, perform eigenvalue decomposition calculation on the covariance matrix to determine a spatial-domain energy weight of the received frequency-domain data, and determine the number of dimensions in a spatial-domain energy direction of the received frequency-domain data (i.e., the number of branches that are processed in parallel), so that parallel processing can be performed on the received frequency-domain data according to a spatial-domain filtering weight corresponding to each of the branches, thereby extracting information in the spatial-domain energy direction of a signal according to a data-domain covariance matrix of the received data, and avoiding spatial-domain filtering calculation according to channel estimation of the received signal. Moreover, the spatial-domain filtering processing of an energy dimension of each of the branches can be calculated in parallel, thereby reducing complexity of algorithm processing while ensuring realtime and effectiveness of spatial-domain filtering calculation.

A data processing method provided by an embodiment of the present application is illustrated below in detail by specific embodiments and application scenarios thereof with reference to the accompanying drawings.

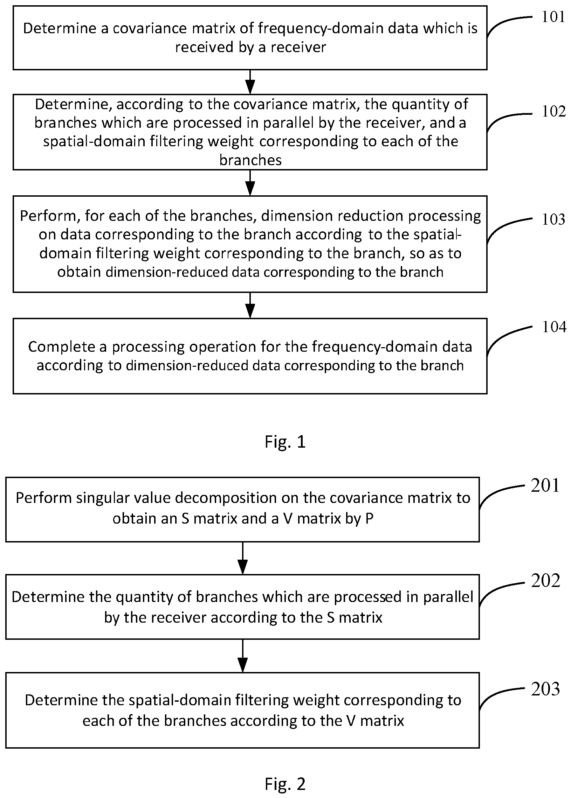

Fig. 1 shows a data processing method provided by an embodiment of the present application, the method may be executed by a receiver, and the method includes the following steps S101 to S104.

At step 101: a covariance matrix of frequency-domain data which is received by the receiver is determined.

In some cases, prior to determining the covariance matrix of the frequency-domain data, the receiver may perform cyclic prefix (CP) removing and fast Fourier transform (FFT) related processing on the received data to obtain initial frequency-domain data, and rearrange the initial frequency-domain data according to the antenna dimension to obtain rearranged frequency-domain data, so that covariance matrix calculation may be performed on the rearranged frequency-domain data.

For example, the dimension of the initial frequency-domain data is [RE, Sym, Ka], where RE represents the number of resource elements, Sym represents a sum value of the data symbol number and the pilot symbol number, Ka represents the antenna dimension; and the dimension of the rearranged frequency-domain data $R_{squ}$ is [N, Ka], where N represents a product of RE and Sym. As an example, assuming that the initial frequency-domain data is $3276 \times 14 \times 32$, the rearranged frequency-domain data is $45864 \times 32$.

A formula for the covariance matrix of the frequency-domain data may be expressed as:

$$Cov_{squ} = \frac{1}{Nre} \sum_{i=0}^{Nre-1} R_{squ,i}^{H} R_{squ,i};$$

Nre represents the number of the resource elements, $R_{squ,i}^{H}$ represents a conjugate matrix of the frequency-domain data $R_{squ,i}$, the dimension of $Cov_{squ}$ is Ka×Ka, where Ka represents the antenna dimension.

At step 102: the quantity of branches which are processed in parallel by the receiver, and a spatial-domain filtering weight corresponding to each of the branches are determined according to the covariance matrix.

Each of the branches corresponds to an antenna of at least one dimension, which achieves selection and division of the antennas according to the dimensions. For example, assuming that there are 3 branches, the first branch may correspond to antennas of 2 dimensions (i.e. 2 antennas), the second branch may correspond to antennas of 4 dimensions, and the third branch may correspond to antennas of 8 dimensions. For another example, assuming that there are 8 branches, each of the branches may correspond to an antenna of one dimension.

According to the determined covariance matrix, the quantity of branches which are processed in parallel by the receiver, and the spatial-domain filtering weight corresponding to each of the branches are determined, thus selection of the quantity of branches which are processed in parallel and the extraction of information in a spatial-domain energy direction are achieved, so that each branch can perform spatial-domain filtering processing in parallel, ensuring realtime and effectiveness of spatial filtering calculation and reducing complexity of algorithm processing.

At step 103: for each of the branches, dimension reduction processing is performed on data corresponding to the branch according to the spatial-domain filtering weight corresponding to the branch, so as to obtain dimension-reduced data corresponding to the branch.

In some cases, for each of the branches, dimension reduction processing is performed on the data corresponding to the branch according to the spatial-domain filtering weight corresponding to the branch, so that subsequent processing calculation can be performed according to the dimension-reduced data, thereby reducing the processing complexity.

In one embodiment, performing dimension reduction processing on the data corresponding to the branch according to the spatial-domain filtering weight corresponding to the branch may include: performing dimension reduction processing on the data corresponding to the branch by the following formula according to the spatial-domain filtering weight corresponding to the branch, so as to obtain the dimension-reduced data corresponding to the branch:

$$\mathrm{R}'_{squ,\ i} = \mathrm{R}_{squ} \times G_i;$$

wherein, $\mathrm{R}'_{squ,\ i}$ represents the dimension-reduced data corresponding to an ith branch, $G_i$ represents the spatial-domain filtering weight corresponding to the ith branch, and $\mathrm{R}_{squ}$ represents the frequency-domain data. Of course, a value range of i is from 0 to M, where M is the total quantity of the branches.

In this way, dimension reduction of the frequency-domain data is achieved through the above formula.

At step 104: a processing operation for the frequency-domain data is completed according to the dimension-recued data corresponding to each of the branches.

In some cases, the processing operation for the frequency-domain data is completed according to the dimension-recued data corresponding to each of the branches, and the processing operation may be demodulation, de-rate matching, low density parity check code (LDPC) decoding, de-cyclic redundancy check (CRC) decoding, and other operations, thus completing an entire processing process of the frequency-domain data by the receiver.

In this way, by determining, according to the covariance matrix, the quantity of branches which are processed in parallel by the receiver, and the spatial-domain filtering weight corresponding to each of the branches, performing dimension reduction processing on the data corresponding to the branch according to the spatial-domain filtering weight corresponding to each of the branches, so as to obtain the dimension-reduced data corresponding to the branch, and completing the processing operation for the frequency-domain data according to the data which has been subjected to dimension reduction and corresponds to each of the branches, this embodiment achieves spatial-domain filtering processing and parallel calculation of the branches, reduces the complexity of algorithm processing while ensuring the realtime and effectiveness of spatial-domain filtering calculation.

In addition, in an implementation, as shown in Fig. 2, determining, according to the covariance matrix, the quantity of branches which are processed in parallel by the receiver, and the spatial-domain filtering weight corresponding to each of the branches may include the following steps S201 to S203.

At step 201: singular value decomposition (SVD) is performed on the covariance matrix to an S matrix and a V matrix.

In this step, the S matrix and V matrix may be obtained by performing eigenvalue decomposition calculation, such as SVD decomposition: [U,S,V] = svd($Cov_{squ}$) on the covariance matrix.

At step 202: the quantity of branches which are processed in parallel by the receiver is determined according to the S matrix.

In one embodiment, determining the quantity of branches which are processed in parallel by the receiver according to the S matrix may include: an energy threshold is determined according to diagonal element values of the S matrix; the number of diagonal element values greater than the energy threshold may be determined from diagonal elements of the S matrix, wherein a maximum value of the number is less than the antenna dimension number of the antenna; and the quantity of branches which are processed in parallel by the receiver may be determined according to the number.

When the energy threshold is determined according to the diagonal element values of the S matrix, the energy threshold may be determined by the following formula:

$$Thr_p = \frac{1}{Ka/2} \sum_{i=Ka/2}^{Ka} S(i,i) \cdot 10^{\wedge}(Pthr/10)$$ ;

where $Thr_P$ represents the energy threshold, Ka represents the antenna dimensions of the antenna, $S(i, i)$ represents the S matrix, and Pthr represents a preset energy threshold value.

In addition, after the energy threshold is determined, the number of diagonal element values greater than the energy threshold may be determined from the diagonal elements of the S matrix, this number needs to be less than the antenna dimension number of the antenna, and then the quantity of branches which are processed in parallel by the receiver is determined according to this number.

For example, assuming that the antenna dimension number of the antennas is 32, the determined maximum value of the energy dimension (i.e. the number of diagonal element values greater than the energy threshold) is preset to not exceed the antenna dimension number with a preset proportion, and the preset proportion is 1/4, then the maximum value of the determined number of the diagonal element values is 8. In this way, selection of the energy dimension is achieved in this manner.

In addition, when determining the quantity of branches which are processed in parallel by the receiver according to the determined number of the diagonal element values, the quantity may be limited according to the requirements. For example, following the above example, assuming that the maximum value of the determined number of diagonal element values is 8, the quantity of branches which are processed in parallel by the receiver may be 3, 4, or 8, which is not specifically limited here.

At step 203: the spatial-domain filtering weight corresponding to each of the branches is determined according to the V matrix.

In some cases, determining the spatial-domain filtering weight corresponding to each of the branches according to the V matrix may include: a target column in the V matrix is determined for each of the branches, wherein the target column includes a first column to an Nth column, where N is the antenna dimension number corresponding to the branch; and data located in the target column in all rows of the V matrix is determined as the spatial-domain filtering weight corresponding to the branch.

As an example, assuming that the quantity of branches is 4, three branches A, B, and C are included, the antenna dimension number corresponding to the branch A is 2, the antenna dimension number corresponding to the branch B is 4, and the antenna dimension number corresponding to the branch C is 8. For the branch A, it may be determined that the target column is the first column to a second column, and at this point, the data located in the first column to the second column in all the rows of the V matrix may be determined as a spatial-domain filtering weight corresponding to the branch A. For the branch B, it may be determined that the target column is the first column to a fourth column, and at this point, the data located in the first column to the fourth column in all the rows of the V matrix may be determined as a spatial-domain filtering weight corresponding to the branch B. For the branch C, it may be determined that the target column is the first column to an eighth column, and at this point, the data located in the first column to the eighth column in all the rows of the V matrix may be determined as a spatial-domain filtering weight corresponding to the branch C.

At this point, the spatial-domain filtering weight corresponding to each of the branches may be represented by the following formula: $G_i = V(:,1:2^i)$, where, $G_i$ represents a spatial-domain filtering weight corresponding to an $i^{th}$ branch, V represents the V matrix, a value range of i is from 0 to M, and M is the total quantity of branches. In the formula, the comma is used to separate the front and back parts, the colon before the comma represents selection of all the rows in the V matrix, and the colon after the comma represents the target column ranges from 1 to $2^i$.

In this way, by performing singular value decomposition (SVD) on the covariance matrix, the S matrix and the V matrix are obtained, so that the quantity of the branches which are processed in parallel by the receiver is determined through the S matrix, and the spatial-domain filtering weight corresponding to each of the branches is determined through the V matrix. Thus, the receiver can process spatial-domain filtering of different energy dimensions in parallel and can perform dimension reduction on each of the branches, ensuring realtime and effectiveness of spatial-domain filtering calculation.

In addition, in another implementation, completing the processing operation for the frequency-domain data according to the dimension-reduced data corresponding to each of the branches may include the following steps: channel estimation and equalization processing is performed on the dimension-reduced data corresponding to each of the branches, to obtain equalized data corresponding to each of the branches is obtained; target equalization data is determined according to the equalized data corresponding to each of the branches; and the processing operation for the frequency-domain data is completed by processing the target equalization data.

In some cases, a process of obtaining the equalized data corresponding to each of the branches by performing channel estimation and equalization processing on the dimension-reduced data corresponding to each of the branches may refer to a processing process of a traditional receiver, which will not be elaborated here.

In addition, determining the target equalization data according to the equalized data corresponding to each of the branches may include any of the following manners one and two.

In manner one, error vector magnitude (EVM) calculation is performed on the equalized data corresponding to each of the branches, and the target equalization data is determined according to an EVM value corresponding to each of the branches.

In this manner, the target equalization data may be determined according to the EVM value corresponding to each of the branches.

In some cases, determining the target equalization data according to the EVM value corresponding to each of the branches may include: the equalized data corresponding to a minimum EVM value is determined as the target equalization data. That is, a branch with the minimum EVM is selected as an optimal branch here, and the equalized data corresponding to the branch with the minimum EVM is determined as the target equalization data.

That is: $[\text{min\_index}] = min\left(EVM\left(C'_{points,i}\right)\right)$;

Where, ( $C'_{points,i}$ ) represents equalized data corresponding to the ith branch, $EVM\left(C'_{points,i}\right)$ represents an EVM value of the equalized data corresponding to the ith branch, and min_index represents an index of the branch with the minimum EVM.

$$C^{final}_{points} = C'_{points}(min\_index);$$

$C'_{points}(min\_index)$ represents the equalized data corresponding to the index of the branch with the minimum EVM, and $C^{final}_{points}$ represents the target equalization data.

Alternatively, determining the target equalization data according to the EVM value corresponding to each of the branches may include: at least one target EVM value that meets a preset EVM threshold is selected from all the EVM values, and a sum of the equalized data respectively corresponding to the at least one target EVM value is determined as the target equalization data.

In some cases, meeting the preset EVM threshold may be less than the preset EVM threshold.

That is: $[\text{index}] = \text{find}\left(EVM\left(C'_{points,i}\right) < EVM_{Thr}\right)$;

$$C^{final}_{points} = sum\left(C'_{points}(index)\right);$$

Where, $EVM_{Thr}$ represents the preset EVM threshold, which may be set according to demand, index represents the index corresponding to at least one target EVM value, $C'_{points}(index)$ represents the equalized data respectively corresponding to the determined index, and $C^{final}_{points}$ represents the target equalization data.

In this way, by performing error vector magnitude (EVM) calculation on the equalized data corresponding to each of the branches, and determining the target equalization data according to the EVM value corresponding to each of the branches, a selection operation of the branches is achieved, and the flexibility of the algorithm is enhanced.

In manner two, an average value of the equalized data corresponding to all the branches is determined, and the average value is determined as the target equalization data.

In this manner, the average value of the equalized data corresponding to all the branches is determined as the target equalization data, namely, $C_{points}^{final} = sum(C_{points,i}^{'})/M$ , where M is the quantity of all branches.

In this way, the process of determining the target equalization data is achieved through any of the above manners.

In addition, it should be noted that after determining the target equalization data, subsequent demodulation, de-rate matching, low density parity check code (LDPC) decoding, de-cyclic redundancy check (CRC) decoding, and other operations may be performed to complete the entire receiver processing process.

The present application is illustrated in detail below by specific embodiments.

Embodiment 1:

Assuming that an application scenario is single-terminal single-stream, parameters are as shown in Table 1.

Table 1

| Item | Definition | Description |
| --- | --- | --- |
| Received initial frequency-domain data | $R_{data}$ | Original frequency-domain data with a dimension of [RE, Sym, Ka] |
| Bandwidth Number of RBs | 100M | |
| Number of RBs | 273 | |
| Number of REs | 3276 | |
| Pilot symbol number Sym | 1 | |
| Data symbol number Sym | 13 | |
| Receiving antenna Ka | 32 | |
| Spatial-domain energy dimension N | 4 | |
| Number of parallel branches | 3 | |
| Each branch dimension Mi | 1/2/4 | |

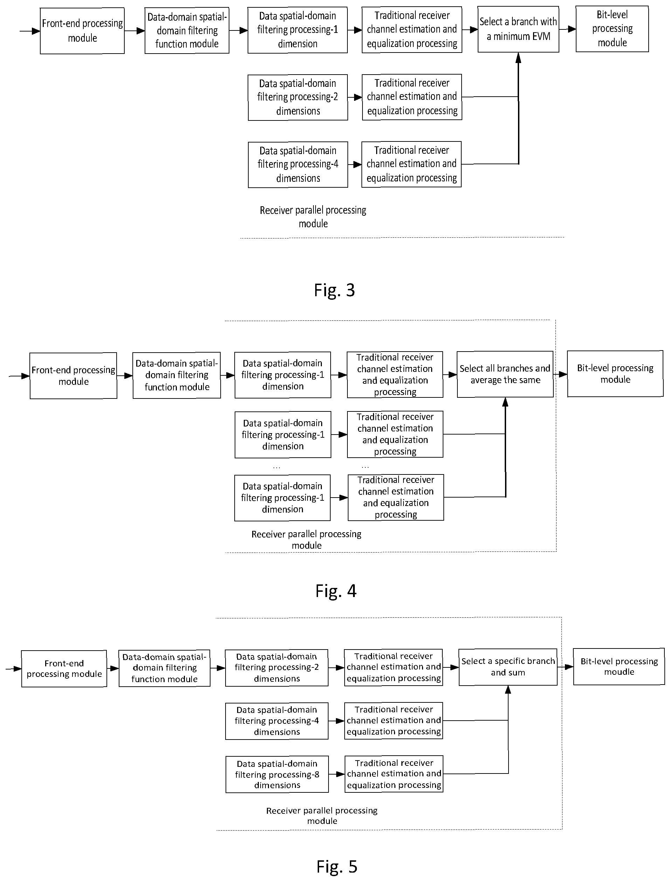

Referring to the schematic structural diagram of the receiver shown in Fig. 3, the receiver includes a front-end processing module, a data-domain spatial-domain filtering function module, a receiver parallel processing module, and a bit-level processing module. The specific processing steps 1 to 4 are as follows.

At step 1: the receiver front-end processing module specifically performs the following processing flows.

Frequency-domain received data $R_{data}$ is obtained by performing CP removing and FFT related processing on the received data, and the dimension of $R_{data}$ is 3276×14×32; and data rearrangement is performed on $R_{data}$ according to the antenna dimension, the rearranged data is $R_{squ}$, and the dimension of $R_{squ}$ is 45864×32.

At step 2: the data-domain spatial-domain filtering function module performs data-domain spatial-domain filtering processing, and specifically performs the following processing flows.

Data-domain covariance matrix calculation processing is performed according to the received frequency-domain data so as to calculate the covariance matrix $Cov_{squ}$ of the received data $R_{squ}$,

$Cov_{squ} = \frac{1}{Nre} \sum_{i=0}^{Nre-1} R_{squ,i}^{H} R_{squ,i}$ , and the dimension of $Cov_{squ}$ is 32×32.

Then, eigenvalue decomposition calculation is performed according to the data-domain covariance matrix, and singular value decomposition (SVD) is performed on the covariance matrix $Cov_{squ}$:

$$[U, S, V] = svd(Cov_{squ})$$

And then, the dimension number N of the received frequency-domain data in the spatial-domain energy direction is calculated, which includes that the energy threshold is calculated according to a diagonal element energy judgment of the S matrix:

$$Thr_p = \frac{1}{Ka/2} \sum_{i=Ka/2}^{Ka} S(i,i) \cdot 10^{\wedge}(Pthr/10)$$

where $Thr_P$ is an energy threshold value, which is configured according to an empirical value and may be configured as 3dB.

Then, the diagonal elements of the S matrix and the energy threshold are judged according to the energy threshold $Thr_P$, and the energy dimension greater than the energy threshold is selected. N is the dimension number that meets the threshold requirements, and the maximum value of N is limited to no more than 1/4 of the number of antennas. In this embodiment, the value of N is determined to be 4.

And then, the dimensions of parallel processing branches and the corresponding spatial-domain filtering weights are selected according to a certain judgment criteria. For example, according to the value of N, it may be determined that the number of parallel-processing branches in this embodiment is 3, and the dimension Mi corresponding to each of the branches is 1/2/4 (i.e. one branch corresponds to 1 antenna, one branch corresponds to 2 antennas, and one branch corresponds to 4 antennas), and the corresponding spatial-domain filtering weights of the branches are respectively acquired. The spatial-domain filtering weight corresponding to each of the branches is:

$$G_i = V(:,1:2^{i-1});$$

wherein, $G_i$ represents the spatial-domain filtering weight corresponding to the ith branch, V represents the V matrix, the value range of i is from 0 to M, and M is the total quantity of branches. In the formula, the comma is used to separate the front and back parts, the colon before the comma represents selection of all the rows in the V matrix, and the colon after the comma represents the range of the target column from 1 to $2^{i-1}$.

At step 3: the receiver parallel processing module performs the following processing flows.

In spatial-domain filtering processing: each of the branches respectively performs spatial-domain filtering dimension reduction processing according to the spatial-domain filtering weight of each of the branches, so as to acquire the dimension-reduced data $R'_{squ,i}$. The dimension of the data which has been subjected to dimension reduction is 45864×Mi, where Mi represents the antenna dimension number corresponding to the ith branch.

$R'_{squ,\ i} = R_{squ} \times G_i$, wherein, $R'_{squ,\ i}$ represents the dimension-reduced data corresponding to an ith branch, $G_i$ represents the spatial-domain filtering weight corresponding to the ith branch, and $R_{squ}$ represents the frequency-domain data.

In traditional receiver processing: traditional receiver channel estimation and equalization processing is performed on the $R'_{squ}$ data to acquire equalized data $C'_{points,i}$.

In branch selection function processing: EVM calculation is performed on the equalized data $C'_{points,i}$ of each of the branches that has been subjected to parallel processing, a branch with the minimum EVM is selected as an optimal branch, and the equalized data corresponding to the branch with the minimum EVM is determined as the target equalization data.

At step 4: the bit-level processing module specifically performs the following processing flows.

The target equalization data is sent to the bit-level processing module for subsequent demodulation, de-rate matching, LDPC decoding, CRC code and other operations, thus completing the entire receiver processing process.

Embodiment 2:

Assuming that an application scenario is a single-terminal single-flow, parameters are as shown in Table 2.

Table 2

| Item | Definition | Description |
|---|---|---|
| Received initial frequency-domain data | $R_{data}$ | Original frequency-domain data with a dimension of [RE, Sym, Ka] |

(continued)

| Item | Definition | Description |
|---|---|---|
| Bandwidth | 100M | |
| Number of RBs | 273 | |
| Number of REs | 3276 | |
| Pilot symbol number Sym | 1 | |
| Data symbol number Sym | 13 | |
| Receiving antenna Ka | 32 | |
| Spatial-domain energy dimension N | 8 | |
| Number of parallel branches | 8 | |
| Each branch dimension Mi | 1/1/1/1/1/1/1/1 | |

Referring to the schematic structural diagram of the receiver shown in Fig. 4, the receiver includes a front-end processing module, a data-domain spatial-domain filtering function module, a receiver parallel processing module, and a bit-level processing module. The specific processing steps 1 to 4 are as follows.

At step 1: the receiver front-end processing module specifically performs the following processing flows.

Frequency-domain received data $R_{data}$ is obtained by performing CP removing and FFT related processing on the received data, and the dimension of $R_{data}$ is $3276 \times 14 \times 32$; and data rearrangement is performed on $R_{data}$ according to the antenna dimension, the rearranged data is $R_{squ}$, and a dimension of $R_{squ}$ is $45864 \times 32$;

At step 2: the data-domain spatial-domain filtering function module performs data-domain spatial-domain filtering processing, and specifically performs the following processing flows.

Data-domain covariance matrix calculation processing is performed according to the received frequency-domain data so as to calculate the covariance matrix $Cov_{squ}$ of the received data $R_{squ}$,

$$Cov_{squ} = \frac{1}{Nre} \sum_{i=0}^{Nre-1} R_{squ,i}^H R_{squ,i}$$, and the dimension of $Cov_{squ}$ is $32 \times 32$.

Then, eigenvalue decomposition calculation is performed according to the data-domain covariance matrix, and singular value decomposition (SVD) is performed on the covariance matrix $Cov_{squ}$:

$$[U, S, V] = svd(Cov_{squ})$$

And then, the dimension number N of the received signal in the spatial-domain energy direction is calculated, which includes that the energy threshold is calculated according to a diagonal element energy judgment of the S matrix:

$$Thr_p = \frac{1}{Ka/2} \sum_{i=Ka/2}^{Ka} S(i,i) \cdot 10^\wedge (Pthr/10)$$

wherein $Thr_P$ is an energy threshold value, which is configured according to an empirical value and may be configured as 3dB.

The diagonal elements of the S matrix and the energy threshold are judged according to the energy threshold $Thr_P$, and the energy dimension greater than the energy threshold is selected. N is the dimension number that meets the threshold requirements, and the maximum value of N is limited to no more than 1/4 of the number of antennas. In this embodiment, the value of N is determined to be 8.

And then, the dimensions of parallel processing branch and the corresponding spatial-domain filtering weights are selected according to a certain judgment criteria. For example, according to the value of N, it may be determined that the number of parallel-processing branches in this embodiment is 8, and the dimension Mi corresponding to each of the branches is 1/1/1/1/1/1/1/1, and the corresponding spatial-domain filtering weights of the branches are respectively acquired. The spatial-domain filtering weight corresponding to each of the branches is:

$$G_i = V(:,i)$$.

wherein, $G_i$ represents the spatial-domain filtering weight corresponding to the ith branch, V represents the V matrix, the value range of i is from 0 to M, and M is the total quantity of branches. In the formula, the comma is used to separate the front and back parts, the colon before the comma represents selection of all the rows in the V matrix, and the colon after the comma represents the value of the target column being i.

At step 3: the receiver parallel processing module specifically performs the following processing flows.

In spatial-domain filtering processing: each of the branches respectively performs spatial-domain filtering dimension reduction processing according to the spatial-domain filtering weight of each of the branches, so as to acquire the dimension-reduced data $R'_{squ,i}$. The dimension of the data which has been subjected to dimension reduction is 45864×Mi. $R'_{squ,\ i} = R_{squ} \times G_i$, wherein, $R'_{squ,\ i}$ represents the dimension-reduced data corresponding to an ith branch, $G_i$ represents the spatial-domain filtering weight corresponding to the ith branch, and $R_{squ}$ represents the frequency-domain data.

In traditional receiver processing: traditional receiver channel estimation and equalization processing is performed on the $R_{squ}$ data to acquire equalized data $C'_{points,i}$.

In branch selection function processing: average calculation is performed on the equalized data $C'_{points,i}$ of each of the branches that has been subjected to parallel processing, and final equalized data $C^{final}_{points}$ is output; and

$$C^{final}_{points} = sum(C'_{points,i})/N$$

, N represents the quantity of all branches.

At step 4: the bit-level processing module specifically performs the following processing flows. $C^{final}_{points}$ is sent to the bit-level processing module for subsequent demodulation, de-rate matching, LDPC decoding, de-CRC and other operations, thus completing the entire receiver processing.

Embodiment 3:

Assuming that an application scenario is a single-terminal two-stream, parameters are as shown in Table 3.

Table 3

| Item | Definition | Description |
|---|---|---|
| Received initial frequency-domain data | $R_{data}$ | Original frequency-domain data with a dimension of [RE, Sym, Ka] |
| Bandwidth Number of RBs | 100M | |
| Number of RBs | 273 | |
| Number of REs | 3276 | |
| Pilot symbol number Sym | 1 | |
| Data symbol number Sym | 13 | |
| Receiving antenna Ka | 64 | |
| Spatial-domain energy dimension N | 8 | |
| Number of parallel branches | 3 | |
| Each branch dimension Mi | 2/4/8 | |

Referring to the schematic structural diagram of the receiver shown in Fig. 5, the receiver includes a front-end processing module, a data-domain spatial-domain filtering function module, a receiver parallel processing module, and a bit-level processing module. The specific processing steps 1 to 4 are as follows.

At step 1: the receiver front-end processing module specifically performs the following processing flows.

Frequency-domain received data $R_{data}$ is obtained by performing CP removing and FFT related processing on the received data, and the dimension of $R_{data}$ is 3276×14×64; and data rearrangement is performed on $R_{data}$ according to the antenna dimension, the rearranged data is $R_{squ}$, and the dimension of $R_{squ}$ is 45864×64.

At step 2: the data-domain spatial-domain filtering function module performs data-domain spatial-domain filtering processing, and specifically performs the following processing flows.

Data-domain covariance matrix calculation processing is performed according to the received frequency-domain data so as to calculate the covariance matrix $Cov_{squ}$ of the received data $R_{squ}$,

$$Cov_{squ} = \frac{1}{Nre} \sum_{i=0}^{Nre-1} R_{squ,i}^H R_{squ,i}$$ , and the dimension of $Cov_{squ}$ is 64×64.

Then, eigenvalue decomposition calculation is performed according to the data-domain covariance matrix, and singular value decomposition (SVD) is performed on the covariance matrix $Cov_{squ}$:

$$[U, S, V] = svd(Cov_{squ})$$

And then, the dimension number N of the received signal in the spatial-domain energy direction is calculated, which specifically includes:

the energy threshold is calculated according to a diagonal element energy judgment of the S matrix:

$$Thr_p = \frac{1}{Ka/2} \sum_{i=Ka/2}^{Ka} S(i,i) \cdot 10^{\wedge}(Pthr/10)$$

where $Thr_P$ is an energy threshold value, which is configured according to an empirical value and may be configured as 3dB.

Then, the diagonal elements of the S matrix and the energy threshold are judged according to the energy threshold $Thr_P$, and the energy dimension greater than the energy threshold is selected. N is the dimension number that meets the threshold requirements, and the maximum value of N is limited to no more than 1/4 of the number of antennas. In this embodiment, the value of N is determined to be 8.

And then, the dimensions of parallel processing branches and corresponding spatial-domain filtering weights are selected according to a certain judgment criteria. For example, according to the value of N, it may be determined that the number of parallel-processing branches in this embodiment is 3, and the dimension Mi corresponding to each of the branches is 2/4/8 (i.e. one branch corresponds to 2 antenna, one branch corresponds to 4 antennas, and one branch corresponds to 8 antennas), and the corresponding spatial-domain filtering weights of the branches are respectively acquired. The spatial-domain filtering weight corresponding to each of the branches is:

$$G_i = V(:, 1:2^i)$$ ;

wherein, $G_i$ represents the spatial-domain filtering weight corresponding to the ith branch, V represents the V matrix, the value range of i is from 0 to M, and M is the total quantity of branches. In the formula, the comma is used to separate the front and back parts, the colon before the comma represents selection of all the rows in the V matrix, and the colon after the comma represents the range of the target column from 1 to $2^i$.

At step 3: the receiver parallel processing module specifically performs the following processing flows.

In spatial-domain filtering processing: each of the branches respectively performs spatial-domain filtering dimension reduction processing according to the spatial-domain filtering weight of each of the branches, so as to acquire the dimension-reduced data $R'_{squ,i}$ , and the dimension thereof is 45864×Mi.. $R'_{squ,\,i} = R_{squ} \times G_i$ , wherein, $R'_{squ,\,i}$ represents the dimension-reduced data corresponding to an ith branch, $G_i$ represents the spatial-domain filtering weight corresponding to the ith branch, and $R_{squ}$ represents the frequency-domain data.

In traditional receiver processing: traditional receiver channel estimation and equalization processing is performed on the $R'_{squ}$ data to acquire equalized data $C'_{points,i}$ .

In branch selection function processing: EVM calculation is performed on the equalized data $C'_{points,i}$ of each of the branches that has been subjected to parallel processing, the branches with the EVM values that meet the threshold requirement are selected for combination processing, so as to obtain the target equalization data.

That is: $[\text{index}] = \text{find}\left(EVM\left(C'_{points,i}\right) < EVM_{Thr}\right)$;

$$C_{points}^{final} = sum\left(C'_{points}(index)\right);$$

wherein, $EVM_{Thr}$ represents the preset EVM threshold, index represents the index corresponding to at least one target EVM value, $C'_{points}(index)$ represents the equalized data respectively corresponding to the determined index, and $C_{points}^{final}$ represents the target equalization data.

At step 4: the bit-level processing module specifically performs the following processing flows.

The target equalization data is sent to the bit-level processing module for subsequent demodulation, de-rate matching, LDPC decoding, CRC code and other operations, thus completing the entire receiver processing process.

In this way, this embodiment extracts the information in the spatial-domain energy direction according to the data-domain covariance matrix of the received signal, thereby avoiding spatial-domain filtering calculation according to reference signal channel estimation, and achieving a data-domain spatial-domain filtering processing function and a parallel receiver processing function, which can improve receiver performance under a large-scale array antenna while reducing processing complexity of the large-scale array antenna.

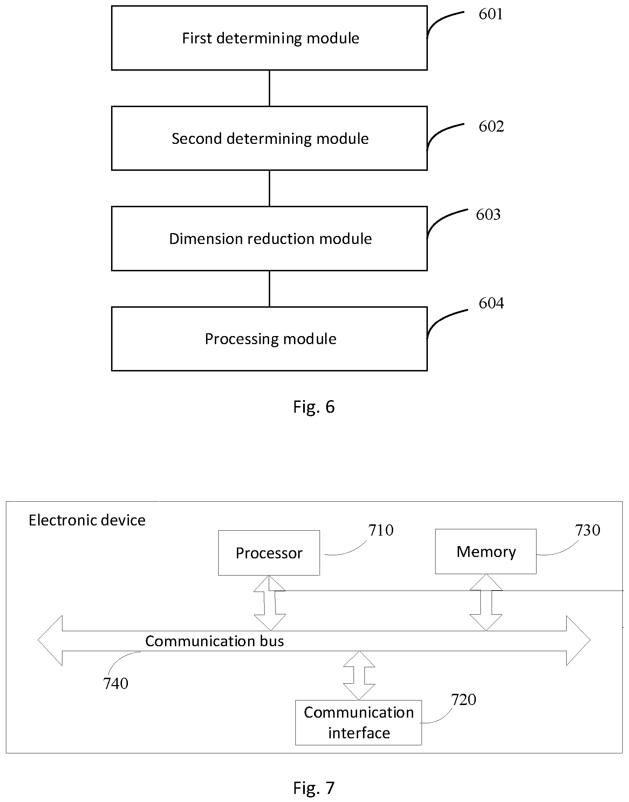

Fig. 6 shows a schematic structural diagram of a data processing apparatus provided by an embodiment of the present application. As shown in Fig. 6, the data processing apparatus includes the following modules.

A first determining module 601 is configured to determine a covariance matrix of frequency-domain data which is received by a receiver.

A second determining module 602 is configured to determine, according to the covariance matrix, the quantity of branches which are processed in parallel by the receiver, and a spatial-domain filtering weight corresponding to each of the branches, wherein each of the branches corresponds to an antenna of at least one dimension;

A dimension reduction module 603 is configured to perform, for each of the branches, dimension reduction processing on data corresponding to the branch according to the spatial-domain filtering weight corresponding to the branch, so as to obtain dimension-reduced data corresponding to the branch.

A processing module 604 is configured to complete a processing operation for the frequency-domain data according to the dimension-reduced data corresponding to each of the branches.

In an implementation, the second determining module 602 is configured perform singular value decomposition (SVD) on the covariance matrix to obtain an S matrix and a V matrix by; determine the quantity of branches which are processed in parallel by the receiver according to the S matrix; and determine the spatial-domain filtering weight corresponding to each of the branches according to the V matrix.

In an implementation, the second determining module 602 is configured to determine an energy threshold according to diagonal element values of the S matrix; determine the number of diagonal element values greater than the energy threshold from diagonal elements of the S matrix, wherein a maximum value of the number is less than the antenna dimension number of the antenna; and determine the quantity of branches which are processed in parallel by the receiver according to the number.

In an implementation, the second determining module 602 is configured to determine the energy threshold by the following formula:

$$Thr_p = \frac{1}{Ka/2}\sum_{i=Ka/2}^{Ka} S(i,i)\cdot 10^{\wedge}(Pthr/10)$$ ;

wherein $Thr_P$ represents the energy threshold, Ka represents the antenna dimensions of the antenna, $S(i, i)$ represents the S matrix, and Pthr represents a preset energy threshold value.

In an implementation, the second determining module 602 is configured to determine, for each of the branches, a target column in the V matrix, wherein the target column includes a first column to an Nth column, where N is the antenna dimension number corresponding to the branch; and determine data located in the target column in all rows of the V matrix as the spatial-domain filtering weight corresponding to the branch.

In an implementation, the dimension reduction module 603 is configured to perform dimension reduction processing on the data corresponding to the branch through the following formula according to the spatial-domain filtering weight corresponding to the branch, so as to obtain the dimension-reduced data corresponding to the branch:

$$R'_{squ,\ i} = R_{squ} \times G_i;$$

wherein, $R'_{squ,\ i}$ represents the data which has been subjected to dimension reduction and corresponds to an ith branch, $G_i$ represents the spatial-domain filtering weight corresponding to the ith branch, and $R_{squ}$ represents the frequency-domain data.

In an implementation, the processing module 604 is configured perform channel estimation and equalization processing on the dimension-reduced corresponding to each of the branches to obtain equalized data corresponding to each of the branches; determine target equalization data according to the equalized data corresponding to each of the branches; and complete the processing operation for the frequency-domain data by processing the target equalization data.

In an implementation, the processing module 604 is configured to perform error vector magnitude (EVM) calculation on the equalized data corresponding to each of the branches; and determine the target equalization data according to an EVM value corresponding to each of the branches.

In an implementation, the processing module 604 is configured to determine the equalized data corresponding to a minimum EVM value as the target equalization data; or select at least one target EVM value that meets a preset EVM threshold from all the EVM values, and determine a sum value of the equalized data respectively corresponding to the at least one target EVM value as the target equalization data.

In an implementation, the processing module 604 is configured to determine an average value of the equalized data corresponding to all the branches, and determine the average value as the target equalization data.

The data processing apparatus provided by the embodiment of the present application can implement various processes implemented in the method embodiments of Fig. 1 to Fig. 5, which will not be repeated here.

It should be noted that the embodiments related to the data processing apparatus in this specification and the embodiments related to the data processing method in this specification are based on the same inventive concept. Therefore, the specific implementation of the embodiments related to the data processing apparatus may refer to the implementation of the aforementioned corresponding embodiments of the data processing method, and the repetitions are omitted.

The data processing apparatus in the embodiment of the present application may be an apparatus, or a component, an integrated circuit, or a chip in a receiver. The data processing apparatus in the embodiment of the present application may be an apparatus with an operating system. The operating system may be an Android operating system, or an ios operating system, or any other possible operating systems, which is not specifically limited in the embodiment of the present application.

Based on the same technical concept, an embodiment of the present application further provides an electronic device for executing the above data processing method. Fig. 7 is a schematic structural diagram of an electronic device for implementing various embodiments of the present application. The electronic device may vary significantly due to differences in configuration or performance, and may include: a processor 710, a communication interface 720, a memory 730, and a communication bus 740, wherein the processor 710, the communication interface 720, and the memory 730 complete mutual communication through the communication bus 740. The processor 710 may call a computer program stored on the memory 730 and capable of being run on the processor 710 to perform the following steps: determining a covariance matrix of frequency-domain data which is received by a receiver; determining, according to the covariance matrix, the quantity of branches which are processed in parallel by the receiver, and a spatial-domain filtering weight corresponding to each of the branches, wherein each of the branches corresponds to an antenna of at least one dimension; performing, for each of the branches, dimension reduction processing on data corresponding to the branch according to the spatial-domain filtering weight corresponding to the branch, so as to obtain dimension-reduced data corresponding to the branch; and completing a processing operation for the frequency-domain data according to the data which has been subjected to dimension reduction and corresponds to each of the branches.

The specific execution steps may refer to various steps of embodiments of the data processing method above, and can achieve the same technical effect, which will not be repeated here.

The above electronic device structure does not constitute a limitation on the electronic device. The electronic device may include more or fewer components than that shown in the diagram, or combine certain components, or arrange different components. For example, an input unit may include a graphics processing unit (GPU) and a microphone, and a display unit may be configured with a display panel in a form of a liquid crystal display, an organic light-emitting diode, and the like. The user input unit includes at least one of a touch panel or other input devices. The touch panel is also known as a touch screen. Other input devices may include, but are not limited to, a physical keyboard, a functional key (such as a volume control key or a switch key), a track ball, a mouse, and a joystick, which are not repeated here.

The memory may be configured to store a software program and various data. The memory may mainly include a first storage area for storing a program or an instruction and a second storage area for storing data. The first storage area may store an operating system, an application program or instruction required by at least one function (such as a sound playback function and an image display function), and the like. In addition, the memory may include a volatile memory or a non-volatile memory, or the memory may include both the volatile memory and the non-volatile memory. The non-volatile memory may be a read-only memory (ROM), a programmable ROM (PROM), an erasable PROM (EPROM), an electrically EPROM (EEPROM) or a flash memory. The volatile memory may be a random access memory (RAM), a static RAM (SRAM), a dynamic RAM (DRAM), a synchronous DRAM (SDRAM), a double data rate SDRAM (DDRSDRAM), an enhanced SDRAM (ESDRAM), a synch link DRAM (SLDRAM), and a direct rambus RAM (DRRAM).

The processor may include one or more processing units. Optionally, the processor integrates an application processor and a modem processor, wherein the application processor mainly processes operations related to an operating system, a user interface, an application program and the like, and the modem processor mainly processes a wireless communication signal, such as a baseband processor. It may be understood that the above modem processor may also not be integrated in the processor.

An embodiment of the present application further provides a readable storage medium, a program or instructions is/are stored on the readable storage medium, and the program or the instructions, when executed by a processor, implements/implement various processes of the above data processing method embodiment and can achieve the same technical effects, which is not repeated here to avoid repetition.

The processor is a processor in the electronic device in the above embodiment. The readable storage medium includes a computer-readable storage medium, such as a computer read-only memory (ROM), a random access memory (RAM), a magnetic disk, or an optical disc.

An embodiment of the present application further provides a chip, the chip includes a processor and a communication interface, the communication interface is coupled with the processor, the processor is used to run a program or instructions to implement various processes of the above method embodiment and be capable of achieving the same technical effects, which is not repeated here to avoid repetition.

It should be understood that the chip mentioned in the embodiment of the present application may further be referred to as a system-level chip, a system chip, a chip system, or a system on chip.

It should be noted that terms "including", "containing", or any other variations herein are intended to cover non-exclusive inclusion, such that a process, method, item or apparatus that includes a series of elements not only includes those elements, but also other elements that are not explicitly listed, or further include elements inherent in such the process, method, item or apparatus. Without more limitations, elements defined by a statement "including one" do not exclude the existence of other identical elements in the process, method, item or apparatus that includes the said elements. In addition, it is to be pointed out that the scope of the methods and apparatuses in the implementations of the present application is not limited to performing functions in an order shown or discussed, but may further include performing functions in a substantially simultaneous mode or in an opposite order according to the involved functions. For example, the described methods may be executed in a different order from the described ones, and various steps may also be added, omitted, or combined. In addition, features described with reference to certain examples may be combined in other examples.

According to the descriptions in the foregoing implementations, those skilled in the art may clearly learn that the method according to the above embodiment may be implemented by relying on software and a necessary hardware platform or by using hardware. However, in many cases, the former is the better implementation. Based on such an understanding, the technical solutions of the present application essentially, or the part contributing to the prior art, may be presented in the form of a software product. The computer software product is stored in a storage medium (such as an ROM/RAM, a magnetic disk, or an optical disc) including several instructions to enable a terminal (which may be a mobile phone, a computer, a server, an air conditioner, a network device, or the like) to execute the methods described in all the embodiments of the present application.

The embodiments of the present application have been described above with reference to the accompanying drawings. However, the present application is not limited to the above specific implementations, and the above specific implementations are merely exemplary and not limitative. Those of ordinary skill in the art may make various variations under the teaching of the present application without departing from the spirit of the present application and the protection scope of the claims, and such variations shall all fall within the protection scope of the present application.

## Claims

1. A data processing method, comprising:

   determining a covariance matrix of frequency-domain data which is received by a receiver;
   determining, according to the covariance matrix, a quantity of branches which are processed in parallel by the receiver, and a spatial-domain filtering weight corresponding to each of the branches, wherein each of the branches corresponds to an antenna of at least one dimension;

performing, for each of the branches, dimension reduction processing on data corresponding to the branch according to the spatial-domain filtering weight corresponding to the branch, so as to obtain dimension-reduced data corresponding to the branch; and

completing a processing operation for the frequency-domain data according to the dimension-reduced data corresponding to each of the branches.

2. The data processing method according to claim 1, wherein determining, according to the covariance matrix, the quantity of branches which are processed in parallel by the receiver, and the spatial-domain filtering weight corresponding to each of the branches comprises:

performing singular value decomposition (SVD) on the covariance matrix to obtain an S matrix and a V matrix; determining, according to the S matrix, the quantity of branches which are processed in parallel by the receiver; and

determining, according to the V matrix, the spatial-domain filtering weight corresponding to each of the branches.

3. The data processing method according to claim 2, wherein determining, according to the S matrix, the quantity of branches which are processed in parallel by the receiver comprises:

determining, according to diagonal element values of the S matrix, an energy threshold; determining a number of diagonal element values greater than the energy threshold from diagonal elements of the S matrix, wherein a maximum value of the number is less than an antenna dimension number of the antenna; and

determining, according to the number, the quantity of branches which are processed in parallel by the receiver.

4. The data processing method according to claim 3, wherein determining, according to the diagonal element values of the S matrix, the energy threshold comprises:

determining the energy threshold by the following formula:

$$Thr_p = \frac{1}{Ka/2} \sum_{i=Ka/2}^{Ka} S(i,i) \cdot 10^{\wedge}(Pthr/10)$$ ;

wherein $Thr_P$ represents the energy threshold, Ka represents the antenna dimensions of the antenna, $S(i, i)$ represents the S matrix, and Pthr represents a preset energy threshold value.

5. The data processing method according to claim 2, wherein determining, according to the V matrix, the spatial-domain filtering weight corresponding to each of the branches comprises:

determining, for each of the branches, a target column in the V matrix, wherein the target column comprises a first column to an $N^{th}$ column, and N is an antenna dimension number corresponding to the branch; and

determining data located in the target column in all rows of the V matrix as the spatial-domain filtering weight corresponding to the branch.

6. The data processing method according to claim 1, wherein performing, for each of the branches, dimension reduction processing on the data corresponding to the branch according to the spatial-domain filtering weight corresponding to the branch, so as to obtain the dimension-reduced data corresponding to the branch comprises:

performing dimension reduction processing on the data corresponding to the branch by the following formula according to the spatial-domain filtering weight corresponding to the branch, so as to obtain the dimension-reduced data corresponding to the branch:

$$R'_{squ,\ i} = R_{squ} \times G_i;$$

wherein, $R'_{squ,\ i}$ represents the dimension-reduced data corresponding to an $i^{th}$ branch, $G_i$ represents the spatial-domain filtering weight corresponding to the $i^{th}$ branch, and $R_{squ}$ represents the frequency-domain data.

7. The data processing method according to claim 1, wherein completing the processing operation for the frequency-domain data according to the dimension-reduced data corresponding to each of the branches comprises:

performing channel estimation and equalization processing on the dimension-reduced data corresponding to each of the branches, to obtain equalized data corresponding to each of the branches;
determining, according to the equalized data corresponding to each of the branches, target equalization data; and
completing the processing operation for the frequency-domain data by processing the target equalization data.

8. The data processing method according to claim 7, wherein determining, according to the equalized data corresponding to each of the branches, the target equalization data comprises:

performing error vector magnitude called EVM calculation on the equalized data corresponding to each of the branches; and
determining, according to an EVM value corresponding to each of the branches, the target equalization data.

9. The data processing method according to claim 8, wherein determining, according to the EVM value corresponding to each of the branches, the target equalization data comprises:

determining the equalized data corresponding to a minimum EVM value as the target equalization data; or
selecting at least one target EVM value that meets a preset EVM threshold from all the EVM values, and determining a sum of the equalized data respectively corresponding to the at least one target EVM value as the target equalization data.

10. The data processing method according to claim 7, wherein determining, according to the equalized data corresponding to each of the branches, the target equalization data comprises:
determining an average value of the equalized data corresponding to all the branches, and determining the average value as the target equalization data.

11. An electronic device, comprising a processor, a memory, and a program or instructions stored on the memory and capable of being run on the processor, the program or the instructions, when executed by the processor, implementing steps of the data processing method according to any one of claims 1 to 10.

12. A readable storage medium, storing a program or instructions thereon, the program or the instructions, when executed by a processor, implementing steps of the data processing method according to any one of claims 1 to 10.

Determine a covariance matrix of frequency-domain data which is received by a receiver — 101

Determine, according to the covariance matrix, the quantity of branches which are processed in parallel by the receiver, and a spatial-domain filtering weight corresponding to each of the branches — 102

Perform, for each of the branches, dimension reduction processing on data corresponding to the branch according to the spatial-domain filtering weight corresponding to the branch, so as to obtain dimension-reduced data corresponding to the branch — 103

Complete a processing operation for the frequency-domain data according to dimension-reduced data corresponding to the branch — 104

Fig. 1

Perform singular value decomposition on the covariance matrix to obtain an S matrix and a V matrix by P — 201

Determine the quantity of branches which are processed in parallel by the receiver according to the S matrix — 202

Determine the spatial-domain filtering weight corresponding to each of the branches according to the V matrix — 203

Fig. 2

```
┌──────────────┐   ┌──────────────┐   ┌──────────────┐   ┌──────────────┐   ┌──────────────┐   ┌──────────────┐
│Front-end     │   │Data-domain   │   │Data spatial- │   │Traditional   │   │Select a      │   │Bit-level     │
│processing    │──▶│spatial-      │──▶│domain        │──▶│receiver      │──▶│branch with   │──▶│processing    │
│module        │   │domain        │   │filtering     │   │channel       │   │a minimum EVM │   │module        │
│              │   │filtering     │   │processing-1  │   │estimation and│   │              │   │              │
│              │   │function module│  │dimension     │   │equalization  │   │              │   │              │
└──────────────┘   └──────────────┘   └──────────────┘   │processing    │   └──────────────┘   └──────────────┘
                                                          └──────────────┘
                                       ┌──────────────┐   ┌──────────────┐
                                       │Data spatial- │   │Traditional   │
                                       │domain        │──▶│receiver      │
                                       │filtering     │   │channel       │
                                       │processing-2  │   │estimation and│
                                       │dimensions    │   │equalization  │
                                       └──────────────┘   │processing    │
                                                          └──────────────┘
                                       ┌──────────────┐   ┌──────────────┐
                                       │Data spatial- │   │Traditional   │
                                       │domain        │──▶│receiver      │
                                       │filtering     │   │channel       │
                                       │processing-4  │   │estimation and│
                                       │dimensions    │   │equalization  │
                                       └──────────────┘   │processing    │
                                                          └──────────────┘
                                          Receiver parallel processing
                                                   module
```

Fig. 3

```
┌──────────────┐   ┌──────────────┐   ┌──────────────┐   ┌──────────────┐   ┌──────────────┐   ┌──────────────┐
│Front-end     │   │Data-domain   │   │Data spatial- │   │Traditional   │   │Select all    │   │Bit-level     │
│processing    │──▶│spatial-      │──▶│domain        │──▶│receiver      │──▶│branches and  │──▶│processing    │
│module        │   │domain        │   │filtering     │   │channel       │   │average the   │   │module        │
│              │   │filtering     │   │processing-1  │   │estimation    │   │same          │   │              │
│              │   │function module│  │dimension     │   │and equalization│ │              │   │              │
└──────────────┘   └──────────────┘   └──────────────┘   │processing    │   └──────────────┘   └──────────────┘
                                                          └──────────────┘
                                       ┌──────────────┐   ┌──────────────┐
                                       │Data spatial- │   │Traditional   │
                                       │domain        │──▶│receiver      │
                                       │filtering     │   │channel       │
                                       │processing-1  │   │estimation    │
                                       │dimension     │   │and equalization│
                                       └──────────────┘   │processing    │
                                                          └──────────────┘
                                            ...                  ...
                                       ┌──────────────┐   ┌──────────────┐
                                       │Data spatial- │   │Traditional   │
                                       │domain        │──▶│receiver      │
                                       │filtering     │   │channel       │
                                       │processing-1  │   │estimation    │
                                       │dimension     │   │and equalization│
                                       └──────────────┘   │processing    │
                                                          └──────────────┘
                                          Receiver parallel processing
                                                   module
```

Fig. 4

```
┌──────────────┐   ┌──────────────┐   ┌──────────────┐   ┌──────────────┐   ┌──────────────┐   ┌──────────────┐
│Front-end     │   │Data-domain   │   │Data spatial- │   │Traditional   │   │Select a      │   │Bit-level     │
│processing    │──▶│spatial-      │──▶│domain        │──▶│receiver      │──▶│specific      │──▶│processing    │
│module        │   │domain        │   │filtering     │   │channel       │   │branch and sum│   │moudle        │
│              │   │filtering     │   │processing-2  │   │estimation and│   │              │   │              │
│              │   │function module│  │dimensions    │   │equalization  │   │              │   │              │
└──────────────┘   └──────────────┘   └──────────────┘   │processing    │   └──────────────┘   └──────────────┘
                                                          └──────────────┘
                                       ┌──────────────┐   ┌──────────────┐
                                       │Data spatial- │   │Traditional   │
                                       │domain        │──▶│receiver      │
                                       │filtering     │   │channel       │
                                       │processing-4  │   │estimation and│
                                       │dimensions    │   │equalization  │
                                       └──────────────┘   │processing    │
                                                          └──────────────┘
                                       ┌──────────────┐   ┌──────────────┐
                                       │Data spatial- │   │Traditional   │
                                       │domain        │──▶│receiver      │
                                       │filtering     │   │channel       │
                                       │processing-8  │   │estimation and│
                                       │dimensions    │   │equalization  │
                                       └──────────────┘   │processing    │
                                                          └──────────────┘
                                          Receiver parallel processing
                                                   module
```

Fig. 5

First determining module ———— 601

Second determining module ———— 602

Dimension reduction module ———— 603

Processing module ———— 604

Fig. 6

Electronic device

Processor ———— 710          Memory ———— 730

Communication bus

740

Communication interface ———— 720

Fig. 7

<table>
<tr><td colspan="2">INTERNATIONAL SEARCH REPORT</td><td>International application No.<br><br>**PCT/CN2023/113106**</td></tr>
</table>

| A. | CLASSIFICATION OF SUBJECT MATTER |
|---|---|
| | H04B 7/08(2006.01)i |
| | According to International Patent Classification (IPC) or to both national classification and IPC |

| B. | FIELDS SEARCHED |
|---|---|

Minimum documentation searched (classification system followed by classification symbols)
IPC: H04L,H04B

Documentation searched other than minimum documentation to the extent that such documents are included in the fields searched

Electronic data base consulted during the international search (name of data base and, where practicable, search terms used)
CNTXT, VEN, ENTXT, 3GPP, CJFD, IEEE: 接收, 协方差, 矩阵, 空域, 滤波, 权值, 频域, 天线, covariance, matrix, spatial, filter, weight, frequency, domain, antenna

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 113866796 A (XIDIAN UNIVERSITY) 31 December 2021 (2021-12-31) description, paragraphs [0020]-[0075] | 1-3, 5-12 |
| Y | CN 101556328 A (XIDIAN UNIVERSITY) 14 October 2009 (2009-10-14) description, paragraphs [0002]-[0060] | 1-3, 5-12 |
| A | CN 114403903 A (HANGZHOU DIANZI UNIVERSITY) 29 April 2022 (2022-04-29) entire document | 1-12 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 November 2023** | **23 November 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/113106**

| Patent document cited in search report | | | Publication date (day/month/year) | Patent family member(s) | Publication date (day/month/year) |
|---|---|---|---|---|---|
| CN | 113866796 | A | 31 December 2021 | None | |
| CN | 101556328 | A | 14 October 2009 | None | |
| CN | 114403903 | A | 29 April 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211071213